# EUROPÄISCHE PATENTANMELDUNG

(11) **EP 2 119 991 A2**
(43) Veröffentlichungstag der Anmeldung: **18.11.2009**
(21) Anmeldenummer: 09004428.0
(22) Anmeldetag: 27.03.2009
(51) Int. Cl.: F28D 9/00, F28F 3/04

(54) **"Rekuperativer Wärmerückgewinner"**

(30) Priorität: 16.05.2008 DE 102008024038; 12.08.2008 DE 202008010685 U
(71) Anmelder: Klingenburg GmbH, 45968 Gladbeck (DE)
(72) Erfinder: Klingenburg, Hans, D-45239 Essen (DE)
(74) Vertreter: Lelgemann, Karl-Heinz

(57) **Zusammenfassung**

Ein rekuperativer Wärmerückgewinner (1) hat parallel über- bzw. untereinander angeordnete Schichtlagen (2 bis 5), die zwei Volumenströme (6, 7) voneinander trennen und die Übertragung thermischer Energie zwischen den beiden Volumenströmen (6, 7) zulassen, wobei jede Schichtlage (2 bis 5) zueinander parallel verlaufende Erhebungen (8, 10) und Vertiefungen (9, 11) aufweist, die sich über die Schichtlage (2 bis 5) erstrecken.

Um den Wirkungsgrad des rekuperativen Wärmerückgewinners (1) zu erhöhen, wird vorgeschlagen, dass die Erhebungen (8, 10) bzw. Vertiefungen (9, 11) jeder Schichtlage (2 bis 5) zu den Erhebungen (10, 8) bzw. Vertiefungen (11, 9) jeder benachbarten Schichtlage (2 bis 5) geneigt verlaufen.

## Beschreibung

Die Erfindung bezieht sich auf einen rekuperativen Wärmerückgewinner aus parallel über- bzw. untereinander angeordneten Schichtlagen, die zwei Volumenströme voneinander trennen und die Übertragung thermischer Energie zwischen den beiden Volumenströmen zulassen, wobei jede Schichtlage zueinander parallel verlaufende Erhebungen und Vertiefungen aufweist, die sich über die Schichtlage erstrecken.

Die Führung der Volumenströme kann im Gleich-, Gegen-, Kreuzstrom oder auch in komplizierteren Stromführungen erfolgen.

Die beiden Volumenströme durchströmen - jeweils durch die benachbarten Schichtlagen getrennt - den rekuperativen Wärmerückgewinner, wobei beim Durchströmen des rekuperativen Wärmerückgewinners thermische Energie von dem wärmeren Volumenstrom durch die zwischen den beiden Volumenströmen angeordneten Schichtlagen auf den kälteren Volumenstrom übertragen wird. Bei den Volumenströmen handelt es sich vergleichsweise häufig um einen relativ kühlen und einen relativ warmen Luftstrom. Grundsätzlich können die Volumenströme jedoch durch beliebige Fluide gebildet werden.

Je nach Werkstoff der Schichtlagen kann auch ein Stoffaustausch, z.B. von Feuchtigkeit, zwischen den Volumenströmen bzw. Fluiden erfolgen.

Bei derartigen rekuperativen Wärmerückgewinnern tritt das Phänomen auf, dass sich an den Schichtlagen Grenzschichten ausbilden, in denen sich die entsprechenden Anteile der Volumenströme kaum oder nicht mehr bewegen. Hierdurch wird die Übertragung von Wärmeenergie durch die Schichtlagen erheblich beeinträchtigt.

Der Erfindung liegt, ausgehend von dem vorstehend geschilderten Stand der Technik, die Aufgabe zugrunde, einen rekuperativen Wärmerückgewinner zu schaffen, bei dem die Wärmeübertragungseigenschaften zwischen den beiden Volumenströmen verbessert sind und sich dadurch ein erhöhter Wirkungsgrad des rekuperativen Wärmerückgewinners ergibt.

Diese Aufgabe wird erfindungsgemäß dadurch gelöst, dass die Erhebungen bzw. Vertiefungen jeder Schichtlage des rekuperativen Wärmerückgewinners zu den Erhebungen bzw. Vertiefungen jeder benachbarten Schichtlage des rekuperativen Wärmerückgewinners geneigt verlaufen. Hierdurch wird eine permanente Umlenkung der beiden getrennt voneinander zwischen den jeweiligen Schichtlagen durchströmenden Volumenströme erreicht. Die Ausgestaltung laminarer Strömungsverhältnisse innerhalb der Werkstoffmatrix des rekuperativen Wärmerückgewinners wird unterbunden; vielmehr stellen sich in der Werkstoffmatrix des rekuperativen Wärmerückgewinners turbulente Strömungsverhältnisse ein, mittels denen zuverlässig die Ausgestaltung von sich mit geringerer Geschwindigkeit oder gar nicht mehr bewegenden Rand- bzw. Grenzschichten vermieden wird. Eine Beeinträchtigung des Wärmedurchtritts durch die Schichtlagen der Werkstoffmatrix wird hierdurch vermieden. Der erfindungsgemäße rekuperative Wärmerückgewinner hat daher einen im Vergleich zum Stand der Technik erheblich erhöhten Wirkungsgrad. Darüber hinaus wird diese qualitative Verbesserung des rekuperativen Wärmerückgewinners mit einem äußerst geringen technisch-konstruktiven Aufwand erreicht, da im Wesentlichen gleichförmige Schichtlagen in abwechselnd unterschiedlicher Orientierung die Werkstoffmatrix des rekuperativen Wärmerückgewinners bilden können.

Gemäß einer vorteilhaften Ausführungsform des erfindungsgemäßen rekuperativen Wärmerückgewinners verlaufen die Erhebungen bzw. Vertiefungen jeder Schichtlage zu den Erhebungen bzw. Vertiefungen jeder benachbarten Schichtlage um einen vergleichsweise großen Winkel geneigt, wobei sich ein rechter Winkel als besonders zweckmäßig herausgestellt hat.

Zur Ausgestaltung der Erhebungen und Vertiefungen der Schichtlagen kann jede Schichtlage einen amplitudenkonstanten oder amplitudenveränderten wellenförmigen, vorzugsweise sinusförmigen Querschnitt aufweisen, wobei dann Wellentäler der jeweils oberen Schichtlage auf Wellenbergen der jeweils unteren Schichtlage aufliegen. Hierdurch ergibt sich die quasi ständige und kontinuierliche Umlenkung des Strömungskanals in besonders einfacher Weise und mit einem äußerst geringen technisch-konstruktiven Aufwand.

Zur Anpassung des rekuperativen Wärmerückgewinners an unterschiedlichste Anforderungsprofile können die Erhebungen bzw. Vertiefungen benachbarter Schichtlagen unterschiedlich hoch bzw. tief sein. Hierdurch können beliebig unterschiedlich große Strömungsquerschnitte für die jeweiligen Volumenströme mit einem sehr geringen technisch konstruktiven Aufwand hergestellt werden.

Gemäß einer weiteren vorteilhaften Ausgestaltung des erfindungsgemäßen rekuperativen Wärmerückgewinners können die Erhebungen bzw. Vertiefungen etwa in Diagonalrichtung der Schichtlagen verlaufen.

Die Schichtlagen können quasi aus allen für die Ausgestaltung von Werkstoffmatrizen von rekuperativen Wärmerückgewinnern geeigneten Werkstoffen hergestellt werden, je nach Anforderungsprofil und Zusammensetzung der den rekuperativen Wärmerückgewinner durchströmenden Volumenströme. Zum Beispiel können die Schichtlagen aus einem NE-Metallwerkstoff, wie z.B. aus Aluminium, aus einem Buntmetallwerkstoff oder aus einem Edelstahlwerkstoff ausgebildet sein. Auch eine Ausgestaltung der Schichtlagen aus einem geeigneten Kunststoff, einem Werkstoff auf Papierbasis oder aus einem keramischen Werkstoff, insbesondere einem keramischen Werkstoff auf Papierbasis, ist möglich. Ebenso können diese Schichtlagen aus einem der genannten Werkstoffe ausgestaltet sein, der entsprechend mittels geeigneter Beschichtungs- und/oder Tränkungsvorgänge konditioniert ist.

Darüber hinaus kann es selbstverständlich auch möglich sein, bei bestimmten Anforderungsprofilen aus unterschiedlichen Werkstoffen hergestellte Schichtlagen einzusetzen.

Insbesondere ist eine Ausgestaltung der Schichtlagen aus Werkstoffen möglich, die neben der Übertragung thermischer Energie auch einen Stoffaustausch zwischen den Volumenströmen erlaubt.

Um bei Bedarf eine adiabatische Kühlung sicherzustellen, ist es vorteilhaft, wenn die Schichtlagen des rekuperativen Wärmerückgewinners wechselseitig mit einer hygroskopischen Beschichtung versehen werden, wobei hierfür z.B. eine Nanobeschichtung, eine mittels einer hygrophilen Kunststofffolie realisierte Beschichtung od.dgl. zum Einsatz kommen kann.

Die Schichtlagen des erfindungsgemäßen rekuperativen Wärmerückgewinners können quadratisch oder rautenförmig sein, wobei im Falle der rautenförmigen Ausgestaltung die Gegenwinkel 100 Grad bis 120 Grad bzw. 80 Grad bis 60 Grad, vorzugsweise etwa 110 Grad bzw. 70 Grad, aufweisen können. Im Falle der rautenförmigen Ausgestaltung der Schichtlagen können die Ein- und die Austrittsflächen des rekuperativen Wärmerückgewinners größer gestaltet werden.

Eine Erhöhung des Temperaturaustausches des erfindungsgemäßen rekuperativen Wärmerückgewinners kann erreicht werden, wenn jede Schichtlage des rekuperativen Wärmerückgewinners die Form zweier einander an ihrer Basis gegenüberliegenden und einen Abstand zueinander aufweisenden recht- oder spitzwinkligen gleichschenkligen Dreiecke und eines zwischen den Basen der Dreiecke angeordneten Rechtecks aufweisen. Hierdurch ergibt sich eine durch das Rechteck gestreckte Modifizierung der quadratischen bzw. rautenförmigen Schichtlage, wobei der Wärmeaustausch mittels des durch das Rechteck gebildeten Mittelabschnitts des rekuperativen Wärmerückgewinners erheblich erhöht bzw. verbessert werden kann.

Ein Gleichstrom der beiden den Wärmerückgewinner durchströmenden Volumenströme kann erreicht werden, wenn eine Eintritt- und eine Austrittfläche des einen Volumenstroms einander gegenüberliegen und eine Eintritt- und eine Austrittfläche des anderen Volumenstroms einander gegenüberliegen.

Einem Gegenstrom ähnliche Strömungsverhältnisse lassen sich hingegen innerhalb des rekuperativen Wärmerückgewinners erreichen, wenn die Eintritt- und die Austrittfläche des einen Volumenstroms auf einer Seite des in seiner Längsrichtung geteilten Wärmerückgewinners und die Eintritt- und die Austrittfläche des anderen Volumenstroms auf der anderen Seite des in seiner Längsrichtung geteilten Wärmerückgewinners angeordnet sind.

Je nach Anforderungsprofil kann der erfindungsgemäße Wärmerückgewinner hinsichtlich seiner konstruktiven Ausgestaltung und hinsichtlich der in ihm erwünschten Strömungsverhältnisse angepasst werden.

Der erfindungsgemäße Wärmerückgewinner kann zum Temperaturaustausch zwischen zwei gasförmigen, z.B. zwei Luftvolumenströmen, zwei flüssigen Volumenströmen, oder einem gasförmigen, z.B. Luft, und einem flüssigen Volumenstrom eingesetzt werden.

Im Folgenden wird die Erfindung anhand von Ausführungsformen unter Bezugnahme auf die Zeichnung näher erläutert.

Es zeigen:
Figur 1 eine Ausführungsform eines als Kreuzstromwärmetauscher ausgebildeten erfindungsgemäßen rekuperativen Wärmerückgewinners in Teil- und Prinzipdarstellung;
Figuren 2 bis 7 Prinzipdarstellungen weiterer Ausführungsformen des erfindungsgemäßen rekuperativen Wärmerückgewinners.

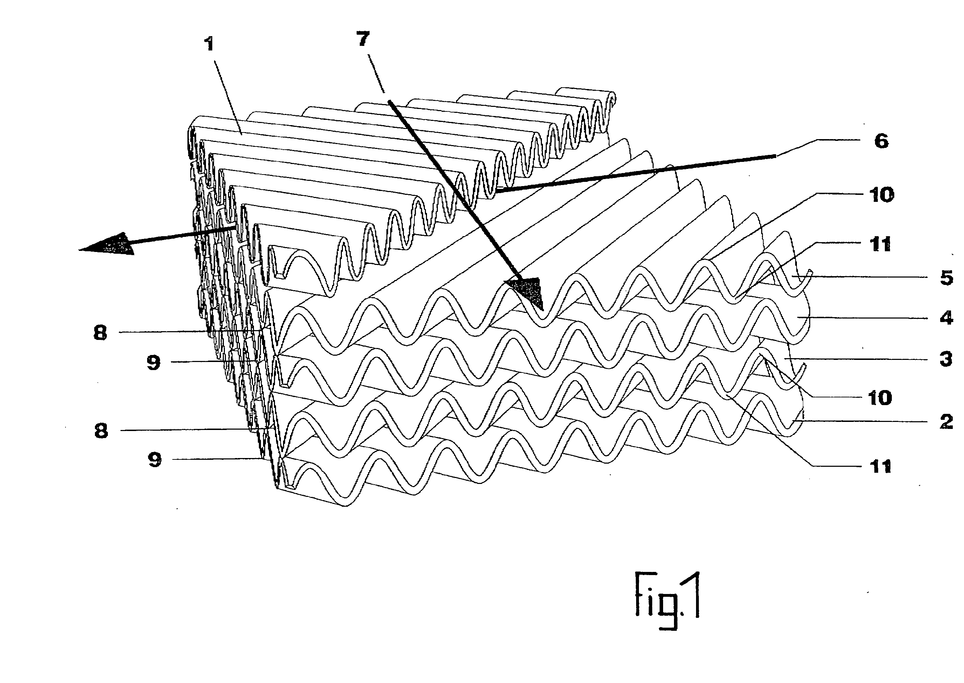

Ein in Figur 1 zur Erläuterung der vorliegenden Erfindung teilweise dargestelltes Ausführungsbeispiel eines erfindungsgemäßen Kreuzstromwärmetauschers 1 wird durch eine in der einzigen Figur teilweise dargestellte Werkstoffmatrix gebildet. Die Werkstoffmatrix besteht aus über- bzw. untereinander angeordneten Schichtlagen, von denen in Figur 1 die Schichtlagen 2, 3, 4 und 5 gezeigt sind.

Eine oberhalb der Schichtlage 5 in Figur 1 gezeigte Schichtlage ist aus Darstellungs- und Erläuterungsgründen lediglich teilweise gezeichnet und nicht mit einem Bezugszeichen versehen.

Es sei darauf hingewiesen, dass anhand der Figur 1 lediglich die prinzipielle Funktionsweise des erfindungsgemäßen Kreuzstromwärmetauschers 1 gezeigt werden soll, der aus einer quasi beliebigen Anzahl von Schichtlagen bestehen kann.

Mittels der über- bzw. untereinander angeordneten Schichtlagen 2 bis 5 werden zwei im dargestellten Ausführungsbeispiel rechtwinklig bzw. quer zueinander gerichtete Volumenströme 6 bzw. 7 voneinander getrennt. Bei dem in Figur 1 gezeigten Teil des erfindungsgemäßen Kreuzstromwärmetauschers strömt der durch den Pfeil 6 hinsichtlich seiner Strömungsrichtung dargestellte Volumenstrom 6 durch den Zwischenraum zwischen den Schichtlagen 2 und 3 sowie den Zwischenraum zwischen den Schichtlagen 4 und 5. Der durch die später noch zu erläuternde Pfeildarstellung 7 hinsichtlich seiner Richtung gekennzeichnete Volumenstrom 7 strömt durch den Zwischenraum zwischen den Schichtlagen 3 und 4 sowie unterhalb der Schichtlage 2 und oberhalb der Schichtlage 5, wobei darauf hinzuweisen ist, dass oberhalb und unterhalb der in Figur 1 gezeigten Schichtlagen 2 bis 5 des Kreuzstromwärmetauschers 1 weitere Schichtlagen vorhanden sind.

Jede Schichtlage 2 bis 5 hat, wie sich aus Figur 1 ergibt, einen wellenförmigen Querschnitt, wodurch im Falle der Schichtlage 2 Erhebungen 8 und Vertiefungen 9 gebildet werden, die zueinander parallel verlaufen und sich über die Schichtlage 2 erstrecken.

Entsprechend hat die oberhalb der Schichtlage 2 in Figur 1 angeordnete Schichtlage 3 Erhebungen 10 und Vertiefungen 11, die ebenfalls parallel zueinander angeordnet sind und sich über die Schichtlage 3 erstrecken.

Die Erhebungen 8 bzw. die Vertiefungen 9 der Schichtlage 2 und entsprechend der Schichtlage 4 verlaufen im in Figur 1 gezeigten Ausführungsbeispiel senkrecht zu den Erhebungen 10 und den Vertiefungen 11 der Schichtlage 3 und entsprechend der Schichtlage 5.

Bei dem Durchtritt durch die Werkstoffmatrix des Kreuzstromwärmetauschers 1 wird, wie anhand des durch den Pfeil 7 anskizzierten Verlauf des Volumenstroms 7 aufgezeigt, der Volumenstrom 7 ständig umgelenkt. Dies geht darauf zurück, dass der Volumenstrom 7 durch die Erhebungen 10 und die Vertiefungen 11 der Schichtlagen 3 und 5 ständig umgelenkt wird. Entsprechend wird der Volumenstrom 6 durch die Erhebungen 8 und die Vertiefungen 9 der Schichtlagen 2 und 4 ständig umgelenkt.

Aufgrund der ständigen Umlenkung der Volumenströme 6, 7 mittels der Ausgestaltung der Schichtlagen 2 bis 5 sowie der Orientierung zueinander benachbarter Schichtlagen 2 bis 5 wird erreicht, dass innerhalb der Werkstoffmatrix des Kreuzstromwärmetauschers 1 weitestgehend turbulente Strömungsverhältnisse vorliegen. Die Ausgestaltung von ruhenden und damit den Wärmeaustausch durch die Schichtlagen 2 bis 5 behindernden Randschichten aus den Medien der beiden Volumenströme 6, 7 wird zuverlässig verhindert.

Grundsätzlich ist es möglich, die Schichtlagen 2 bis 5 aus allen für die Ausgestaltung von Kreuzstromwärmetauschern 1 geeigneten Werkstoffen auszugestalten, z.B. aus Aluminium, aus einem geeigneten Kunststoff oder aus einem in spezieller Weise behandelten Papier.

Selbstverständlich kann anstelle eines Kreuzstromwärmetauschers auch ein Gleich- oder Gegenstromwärmetauscher in der vorstehend prinzipiell geschilderten erfindungsgemäßen Ausgestaltung hergestellt werden. Dies gilt auch für Wärmetauscher mit komplizierteren Stromführungen.

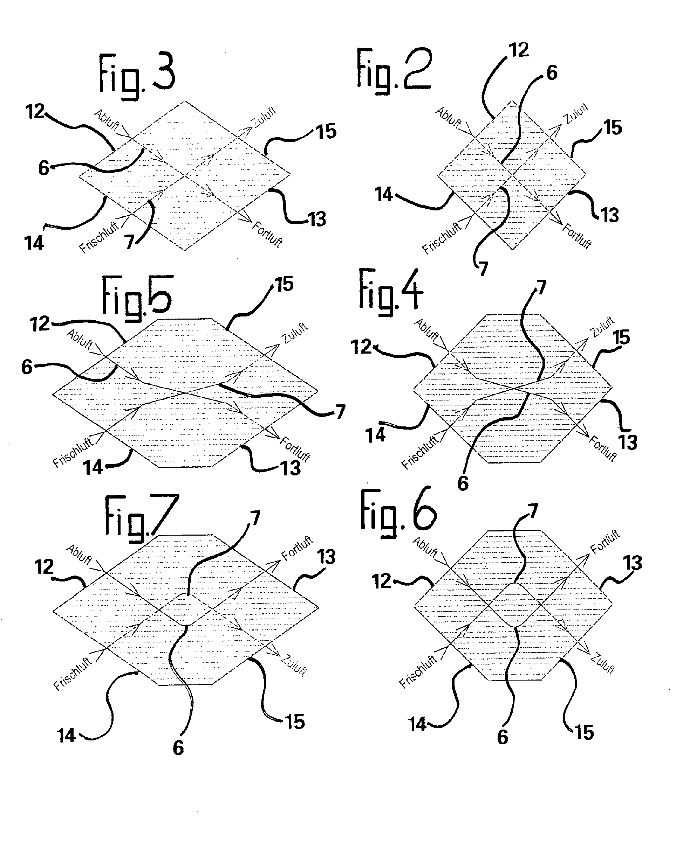

Im Falle einer in Figur 2 gezeigten Ausführungsform des rekuperativen Wärmerückgewinners 1 haben die Schichtlagen 2 bis 5 eine quadratische Form. Durch eine Eintrittfläche 12 tritt der eine Volumenstrom 6 als Abluft ein. Nach dem Durchströmen des Wärmerückgewinners tritt dieser Volumenstrom 6 als Fortluft aus einer Austrittfläche 13 des Wärmerückgewinners aus. Die Austrittfläche 13 liegt der Eintrittfläche 12 gegenüber, d.h., zwischen der Eintrittfläche 12 und der Austrittfläche 13 ist an einer Seite die Eintrittfläche 14 des anderen Volumenstroms 7 und an der anderen Seite die Austrittfläche 15 des anderen Volumenstroms 7 angeordnet. Entsprechend liegen die Eintrittfläche 14 und die Austrittfläche 15 des anderen Volumenstroms 7 ebenfalls einander gegenüber. Der andere Volumenstrom 7 tritt als Frischluft durch die Eintrittfläche 14 in den Wärmerückgewinner 1 ein und als Zuluft durch die Austrittfläche 15 aus dem Wärmerückgewinner 1 aus.

Die in Figur 3 gezeigte Ausführungsform des erfindungsgemäßen Wärmerückgewinners unterscheidet sich von der in Figur 2 gezeigten dadurch, dass die Schichtlagen rautenförmig ausgebildet sind. Hierdurch lassen sich zwischen der Eintrittfläche 12 der Abluft und der Eintrittfläche 14 der Frischluft einerseits und zwischen der Austrittfläche 13 der Fortluft und der Austrittfläche 15 der Zuluft kleinere Winkel realisieren, so dass die Eintrittflächen 12, 14 und die Austrittflächen 13, 15 des Wärmerückgewinners 1 vergrößert werden können.

Figur 4 zeigt eine Ausführungsform eines Wärmerückgewinners, bei dem die in Figur 2 gezeigten Schichtlagen 2 bis 5 um einen zwischen den Eintrittflächen 12, 14 und den Austrittflächen 13, 15 angeordneten rechteckigen Mittelabschnitt, der in den Figuren nicht gesondert mit einem Bezugszeichen versehen ist, gestreckt sind. Die Eintrittfläche 14 der Frischluft liegt der Austrittfläche 15 der Zuluft gegenüber, wohingegen die Eintrittfläche 12 der Abluft der Austrittfläche 13 der Fortluft gegenüberliegt. Der vorstehend erwähnte Mittelabschnitt des rekuperativen Wärmerückgewinners 1 wird von den beiden Volumenströmen 6, 7 im Wesentlichen im Gleichstrom durchströmt.

Im Falle der in Figur 5 gezeigten Ausführungsform des erfindungsgemäßen Wärmerückgewinners sind die Winkel zwischen den Eintrittflächen 12, 14 und den Austrittflächen 13, 15 spitz ausgestaltet, mit der Folge, dass die Eintrittflächen 12, 14 sowie die Austrittflächen 13, 15 des rekuperativen Wärmerückgewinners vergrößert werden können. Auch im Falle der in Figur 5 gezeigten Ausführungsform wird der Mittelabschnitt des rekuperativen Wärmerückgewinners 1 von den Volumenströmen 6, 7 im Wesentlichen im Gleichstrom durchströmt.

Figuren 6 und 7 zeigen ansonsten den Figuren 4 und 5 entsprechende Ausführungsformen des erfindungsgemäßen rekuperativen Wärmerückgewinners, bei denen die Volumenströme 6, 7 den Mittelabschnitt des rekuperativen Wärmerückgewinners im Gegenstrom durchströmen. Dies wird dadurch erreicht, dass die Eintrittfläche 12 der Abluft und die Austrittfläche 13 der Fortluft jeweils auf einer Seite des in seiner Längsrichtung geteilten rekuperativen Wärmerückgewinners angeordnet sind, wohingegen die Eintrittfläche 14 der Frischluft und die Austrittfläche 15 der Zuluft auf der anderen Seite des in seiner Längsrichtung geteilten rekuperativen Wärmerückgewinners 1 angeordnet sind. Hierdurch wird erreicht, dass sich die Volumenströme 6, 7 im Wärmetauscher kreuzen, wie dies durch die mit Pfeilen versehenen Volumenströme 6, 7 in den Figuren 6 und 7 gezeigt ist.

Im Falle der in den Figuren 3, 5 und 7 gezeigten Ausführungsformen kann der Winkel zwischen den Eintrittflächen 12, 14 und den Austrittflächen 13, 15 des rekuperativen Wärmerückgewinners je nach Anforderungsprofil hinsichtlich der Größe der Ein- 12, 14 und Austrittflächen 13, 15 gestaltet werden. Als vorteilhaft hat sich ein Winkel von ca. 79 Grad erwiesen.

Je nach Anforderungsprofil kommen für die Ausgestaltung der Schichtlagen 2 bis 5 Metallwerkstoffe, z.B. Aluminium, Buntmetallwerkstoffe, Edelstahlwerkstoffe, Kunststoffe, Werkstoffe auf Papierbasis, keramische Werkstoffe, insbesondere ein keramischer Werkstoff auf Papierbasis, und/oder Werkstoffe, z.B. Papierwerkstoffe in Frage, die mittels geeigneter Beschichtungs- und/oder Tränkungsvorgänge konditioniert werden können. Es ist möglich, solche Werkstoffe auszuwählen, die neben der Übertragung thermischer Energie auch einen vorzugsweise selektiven Stoffaustausch zwischen den Volumenströmen erlauben.

Bei Ausführungsformen, bei denen eine adiabatische Kühlung sichergestellt werden soll, können die Schichtlagen 2 bis 5 des rekuperativen Wärmerückgewinners 1 mit einer Nanobeschichtung oder mit hygrophiler Kunststofffolie beschichtet werden.

Der erfindungsgemäße rekuperative Wärmerückgewinner 1 kann für zwei gasförmige Volumenströme 6, 7, z.B. für zwei Luftvolumenströme, für zwei flüssige Volumenströme 6, 7 und für einen gasförmigen Volumenstrom 6 sowie einen flüssigen Volumenstrom 7 ausgelegt werden.

## Patentansprüche

1. Rekuperativer Wärmerückgewinner, mit parallel über- bzw. untereinander angeordneten Schichtlagen (2, 3, 4, 5), die zwei Volumenströme (6, 7) voneinander trennen und die Übertragung thermischer Energie zwischen den beiden Volumenströmen (6, 7) zulassen, wobei jede Schichtlage (2, 3, 4, 5) zueinander parallel verlaufende Erhebungen (8 bzw. 10) und Vertiefungen (9 bzw. 11) aufweist, die sich über die Schichtlage (2, 3, 4, 5) erstrecken, **dadurch gekennzeichnet, dass** die Erhebungen (8, 10) bzw. Vertiefungen (9, 11) jeder Schichtlage (2 bis 5) zu den Erhebungen (10, 8) bzw. Vertiefungen (11, 9) jeder benachbarten Schichtlage (2 bis 5) geneigt verlaufen.

2. Rekuperativer Wärmerückgewinner nach Anspruch 1, bei dem die Erhebungen (8, 10) bzw. Vertiefungen (9, 11) jeder Schichtlage (2 bis 5) zu den Erhebungen (10, 8) bzw. Vertiefungen (11, 9) jeder benachbarten Schichtlage (2 bis 5) um einen vergleichsweise großen Winkel geneigt verlaufen.

3. Rekuperativer Wärmerückgewinner nach Anspruch 1 oder 2, bei dem die Erhebungen (8, 10) bzw. Vertiefungen (9, 11) jeder Schichtlage (2 bis 5) zu den Erhebungen (10, 8) bzw. Vertiefungen (11, 9) jeder benachbarten Schichtlage (2 bis 5) um einen rechten Winkel geneigt verlaufen.

4. Rekuperativer Wärmerückgewinner nach einem der Ansprüche 1 bis 3, bei dem jede Schichtlage (2 bis 5) einen amplitudenkonstanten oder amplitudenveränderten wellenförmigen, vorzugsweise sinusförmigen, Querschnitt aufweist.

5. Rekuperativer Wärmerückgewinner nach einem der Ansprüche 1 bis 4, bei dem die Höhe der Erhebungen (8, 10) bzw. die Tiefe der Vertiefungen (9, 11) benachbarter Schichtlagen (2 bis 5) unterschiedlich groß sind.

6. Rekuperativer Wärmerückgewinner nach einem der Ansprüche 1 bis 5, bei dem die Erhebungen (8, 10) bzw. Vertiefungen (9, 11) etwa in Diagonalrichtung der Schichtlagen (2 bis 5) verlaufen.

7. Rekuperativer Wärmerückgewinner nach einem der Ansprüche 1 bis 6, dessen Schichtlagen (2 bis 5) aus einem NE-Metallwerkstoff, z.B. aus Aluminium, aus einem Buntmetallwerkstoff oder aus einem Edelstahlwerkstoff ausgebildet sind.

8. Rekuperativer Wärmerückgewinner nach einem der Ansprüche 1 bis 6, dessen Schichtlagen (2 bis 5) aus einem Kunststoff, aus einem Werkstoff auf Papierbasis oder aus einem keramischen Werkstoff, insbesondere einem keramischen Werkstoff auf Papierbasis, hergestellt sind.

9. Rekuperativer Wärmerückgewinner nach einem der Ansprüche 1 bis 8, dessen Schichtlagen (2 bis 5) aus einem Werkstoff, z.B. einem Papierwerkstoff, hergestellt sind, der mittels geeigneter Beschichtungs- und/oder Tränkungsvorgänge konditionierbar ist.

10. Rekuperativer Wärmerückgewinner nach einem der Ansprüche 1 bis 9, bei dem die Schichtlagen (2 bis 5) aus einem Werkstoff hergestellt sind, der außer der Übertragung thermischer Energie auch einen Stoffaustausch zwischen den Volumenströmen (6, 7) erlaubt.

11. Rekuperativer Wärmerückgewinner nach einem der Ansprüche 1 bis 10, dessen Schichtlagen (2 bis 5) mit einer hygroskopischen Beschichtung versehen sind, die eine adiabatische Kühlung sicherstellt, z.B. einer Nanobeschichtung, einer hygrophilen Kunststofffolie od.dgl.

12. Rekuperativer Wärmerückgewinner nach einem der Ansprüche 1 bis 11, dessen Schichtlagen (2 bis 5) quadratisch oder rautenförmig mit Gegenwinkeln von 100 Grad bis 120 Grad bzw. 80 Grad bis 60 Grad, vorzugsweise von etwa 110 Grad bzw. 70 Grad, sind (Figur 2, 3).

13. Rekuperativer Wärmerückgewinner nach einem der Ansprüche 1 bis 12, dessen Schichtlagen (2 bis 5) die Form zweier einander an ihrer Basis gegenüberliegenden recht- oder spitzwinkligen gleichschenkligen Dreiecke und eines zwischen den Basen angeordneten Rechtecks aufweisen (Figur 4 bis 7).

14. Rekuperativer Wärmerückgewinner nach einem der Ansprüche 1 bis 13, bei dem eine Eintritt- (12) und eine Austrittfläche (13) des einen Volumenstroms (6) einander gegenüberliegen und eine Eintritt- (14) und eine Austrittfläche (15) des anderen Volumenstroms (7) einander gegenüberliegen (Figur 2 bis 5).

15. Rekuperativer Wärmerückgewinner nach einem der Ansprüche 1 bis 13, bei dem eine Eintritt- (12) und eine Austrittfläche (13) des einen Volumenstroms (6) auf einer Seite des in seiner Längsrichtung geteilten Wärmerückgewinners (1) und eine Eintritt- (14) und eine Austrittfläche (15) des anderen Volumenstromes (7) auf der anderen Seite des in seiner Längsrichtung gezeigten Wärmerückgewinners (1) angeordnet sind (Figur 6, 7).

16. Rekuperativer Wärmerückgewinner nach einem der Ansprüche 1 bis 15, der von zwei gasförmigen, z.B. Luft, zwei flüssigen oder einem gasförmigen, z.B. Luft, und einem flüssigen Volumenstrom durchströmbar ist.
